# EUROPÄISCHE PATENTANMELDUNG

(11) **EP 1 614 349 A2**
(43) Veröffentlichungstag der Anmeldung: **11.01.2006**
(21) Anmeldenummer: 05014600.0
(22) Anmeldetag: 06.07.2005
(51) Int. Cl.: A01L 11/00, A01L 7/04

(54) **Schraubstollenspannsystem und Werkzeug für seine Anwendung**

(30) Priorität: 10.07.2004 DE 202004010770 U
(71) Anmelder: Griesser, Franz, 79771 Klettgau (DE)
(72) Erfinder: Griesser, Franz, 79771 Klettgau (DE); Sautter, Hans-Jörg, 79771 Klettgau (DE)
(74) Vertreter: Ebert, Jutta

(57) **Zusammenfassung**

Es wird ein Schraubstollenspannsystem für den Reitsport beschrieben, das aus einem auf das Ende eines Hufeisens (5) aufschiebbaren Halter (1) und einem in ein am Halter (1) vorgesehenes, durchgehendes Stollenloch (7) mit Innengewinde (8) einschraubbaren Schraubstollen (2) besteht. Der Halter (1) wird auf das Ende eines Hufeisens (5) aufgeschoben und der Schraubstollen (2) im Stollenloch (7) festgezogen. Stollenlöcher im Hufeisen selbst sind nicht mehr notwendig, es entfällt das lästige Ausputzen der Stollenlöcher und das Nachschneiden der Gewinde am Pferd. Das neue System lässt sich leicht, schnell und gefahrlos auch von einer Person ohne besondere Fachkenntnisse anbringen und wieder entfernen

## Beschreibung

Die Erfindung betrifft ein Schraubstollenspannsystem für den Reitsport, wobei am Hufeisen eines Pferdes Schraubstollen befestigt werden, die aus einem Gewindeteil und einem in den Boden greifenden Kopfteil bestehen, und ein Werkzeug zu dessen Anwendung.

Schraubstollen werden im Reitsport dann eingesetzt, wenn aufgrund der Bodenverhältnisse eine erhöhte Gefahr besteht, dass das Pferd ausrutschen und stürzen könnte, was dann zu erheblichen negativen Folgen, wie Verletzungen für Mensch und Tier, führen könnte. Dies ist beispielsweise auf Rasenplätzen oder bei Schnee und Eis der Fall.

Schraubstollen bekannter Bauart bestehen aus einem Gewindeteil, mit dem sie bei Bedarf von unten an den beiden Enden des Hufeisens angeschraubt und nach Gebrauch wieder entfernt werden können, und einem Kopfteil, der im Einsatz in den Boden eingreifen kann. Die Wirkung ist ähnlich wie bei den Stollen an Fußballerschuhen. An den beiden Enden des Hufeisens ist dafür jeweils ein Stollenloch mit Innengewinde vorgesehen; pro Hufeisen kommen also zwei Schraubstollen zum Einsatz.

Bei der Benutzung der bekannten Schraubstollen treten verschiedene Nachteile, Probleme und Schwierigkeiten auf. Zum einen besitzen nicht alle Hufeisen die erforderlichen Stollenlöcher, um die Schraubstollen einschrauben zu können, so dass deren Anwendung gar nicht möglich ist. Andererseits stellt sich bei Hufeisen mit Stollenlöchern das Problem, dass sich diese, wenn kein Stollen eingeschraubt ist, mit Schmutz, wie Erde, kleinen Steinen usw., zusetzen. Vor dem Anbringen der Schraubstollen muss dann das Gewinde der Stollenlöcher erst ausgeräumt und gereinigt werden. Das ist oft sehr schwierig, da die Arbeit am aufgenagelten Hufeisen durchgeführt werden muss. Nicht selten ist das Gewinde auch beschädigt, so dass es am Hufeisen nachgeschnitten werden muss. Dieser Vorgang ist deshalb risikobehaftet, weil das Pferd sich erschrecken kann und dann den Huf abstellen könnte oder versuchen könnte, ihn abzustellen, während sich der Gewindebohrer im Hufeisen befindet. Dabei können sich Mensch und Tier erheblich verletzen.

Ein weiterer Nachteil ist, dass vor jedem Neubeschlag die Stollenlöcher am Eisen gebohrt und die Gewinde geschnitten werden müssen. Abhängig vom Beschlagsintervall stellt dies einen Kostenfaktor von € 60,00 bis € 140,00 pro Jahr dar. Auch die zuvor aufgeführten Arbeiten müssen von einem Fachmann ausgeführt werden, was die Kosten ebenfalls erhöht.

Aufgabe der Erfindung ist es, ein Schraubstollenspannsystem zu schaffen, mit dem die Schraubstollen einfach und schnell, also auch kostensparend von im Grunde jeder beliebigen Person ohne besondere Fachkenntnisse und Fertigkeiten und ohne den Einsatz spezieller Werkzeuge am Hufeisen angebracht und wieder entfernt werden können. Insbesondere soll auch die Verletzungsgefahr für Mensch und Tier soweit irgend möglich ausgeschaltet werden.

Dies wird erfindungsgemäß dadurch erreicht, dass das Schraubstollenspannsystem aus einem auf das Ende eines Hufeisens aufschiebbaren Halter und einem in ein am Halter vorgesehenes, durchgehendes Stollenloch mit Innengewinde einschraubbaren Schraubstollen besteht.

Der Halter, in dem der Schraubstollen schon locker eingeschraubt sein kann, kann auf das Ende eines Hufeisens aufgeschoben werden und der Schraubstollen danach festgezogen werden. Am Hufeisen selbst sind keine Stollenlöcher mehr erforderlich, so dass auch das lästige Reinigen der Stollenlöcher und von Zeit zu Zeit notwendiges Nachschneiden des Gewindes am Pferd entfallen. Das Anbringen der Schraubstollen wird wesentlich erleichtert und kann in kurzer Zeit und auch von einer Person ohne besondere Fachkenntnisse vorgenommen werden. Es wird so auch eine erhebliche Kostenersparnis erreicht.

Der Halter kann in seiner einfachsten Ausführungsform aus einem U-förmigen Bügel bestehen, wobei die Enden der U-Schenkel nach innen abgewinkelt sind und das Hufeisen untergreifen können; das Stollenloch ist im Querschenkel des Bügels vorgesehen.

Das Stollenloch kann von einem Bund umgeben sein, was zur Festigkeit beiträgt.

Wenn der Halter durch eine die U-Schenkel des Bügels verbindende Querwand einseitig abgeschlossen ist, kann der Halter beim Aufschieben auf das Hufeisenende dort einen Anschlag finden und so sicher positioniert werden.

Dies kann noch besser geschehen, wenn die die U-Schenkel des Bügels verbindende Querwand der Rundung eines Hufeisenendes folgend abgerundet ist.

Der Schraubstollen des Systems besteht aus einem Gewindeteil und einem Kopfteil; wenn er mit seinem Gewindeteil in das Stollenloch bis zum festen Aufsitzen auf dem Hufeisen eingeschraubt und festgezogen wird, wirkt das vorstehende Kopfteil als Stollen. Halter und Schraubstollen werden zugleich fest und sicher auf dem Hufeisen gehalten

Das Kopfteil ist vorzugsweise als Sechskant oder als Vierkant ausgebildet, so dass ein handelsüblicher Mutternschlüssel daran angesetzt werden kann.

Wenn das Kopfteil gegenüber dem Gewindeteil radial etwas zurückgesetzt ist, sein Durchmesser also kleiner ist als der des Gewindeteils, kann sich das Gewindeteil beliebig weit in das Stollenloch eindrehen, so dass es auch bei eintretender Abnutzung des Hufeisens festen Halt findet.

In der Stirnseite des Gewindeteils kann ein Innenkonus vorgesehen sein; mit der so entstehenden Ringfläche kann sich das Gewindeteil am Hufeisen besonders gut festziehen, so dass ein Verlust von Halter und/oder Schraubstollen sicher vermieden werden kann.

Das Anbringen und Lösen des Schraubstollenspannsystems kann vorteilhaft mit einem handelsüblichen Mutternschlüssel leicht und schnell vollzogen werden. Ein Werkzeug, das aus einer U-förmigen Schiene besteht, deren U-Schenkel nach innen leicht konisch abgewinkelt sind, kann zur Aufnahme eines oder mehrerer Halter mit Schraubstollen dienen; wenn zugleich an einem Ende der Schiene ein querstehender Hammeransatz angebracht ist, kann dieser dazu benutzt werden, einen Halter, der z.B. aufgrund von Verschmutzung, wie Erde Eis, Schnee, sehr fest auf dem Hufeisenende sitzt, zu lockern, wenn er wieder entfernt werden soll.

Vorzugsweise ist im Hammeransatz ein Sechskantloch bzw. Vierkantloch vorgesehen, so dass das Werkzeug gleichzeitig auch einen Mutternschlüssel ersetzen kann. Es erfüllt damit eine dreifache Aufgabe.

Die Breite der Schiene und der Neigungswinkel ihrer U-Schenkel sollen so bemessen sein, dass Halter samt Schraubstollen vom offenen Ende der Schiene her klemmend in die Schiene eingeschoben werden können. So können sie sicher für ihren Einsatz bereitgehalten werden.

Besonders vorteilhaft ist es, wenn außerdem die Länge der Schiene so bemessen ist, dass ein Satz Halter mit Schraubstollen in der Schiene Platz findet. Sie können so im Werkzeug in der für einen Einsatz richtigen Anzahl bereit gehalten werden und mit demselben Werkzeug angebracht und wieder entfernt werden.

Die Erfindung wird im Folgenden anhand der anhängenden Zeichnungen beispielhaft näher beschrieben; es zeigen
- Fig. 1a: die Draufsicht auf einen Halter des neuen Schraubstollenspannsystems;
- Fig. 1b: den Halter gemäß Fig. 1a um 90° gekippt,
- Fig. 1c: die Seitenansicht des Halters gemäß Fig. 1a,
- Fig. 1d: die Ansicht auf den Halter gemäß Fig. 1a von unten (um 180° gekippt),
- Fig. 1e: die Schnittansicht des Halters gemäß Fig. 1a entlang der Schnittlinie A -A,
- Fig. 2a: die Draufsicht auf einen Schraubstollen,
- Fig. 2b: die Seitenansicht des Schraubstollens gemäß Fig. 2a,
- Fig. 3a: ein Hufeisen bestückt mit zwei Schraubstollen und ihren Haltern,
- Fig. 3b: die Schnittansicht entlang der Schnittlinie A -A in Fig. 3a,
- Fig. 4a: die Seitenansicht eines Werkzeugs zur Anwendung des neuen Schraubstollensystems,
- Fig. 4b: die Draufsicht auf das Werkzeug gemäß Fig. 4a und
- Fig. 4c: die Vorderansicht des Werkzeugs gemäß Fig. 4a.

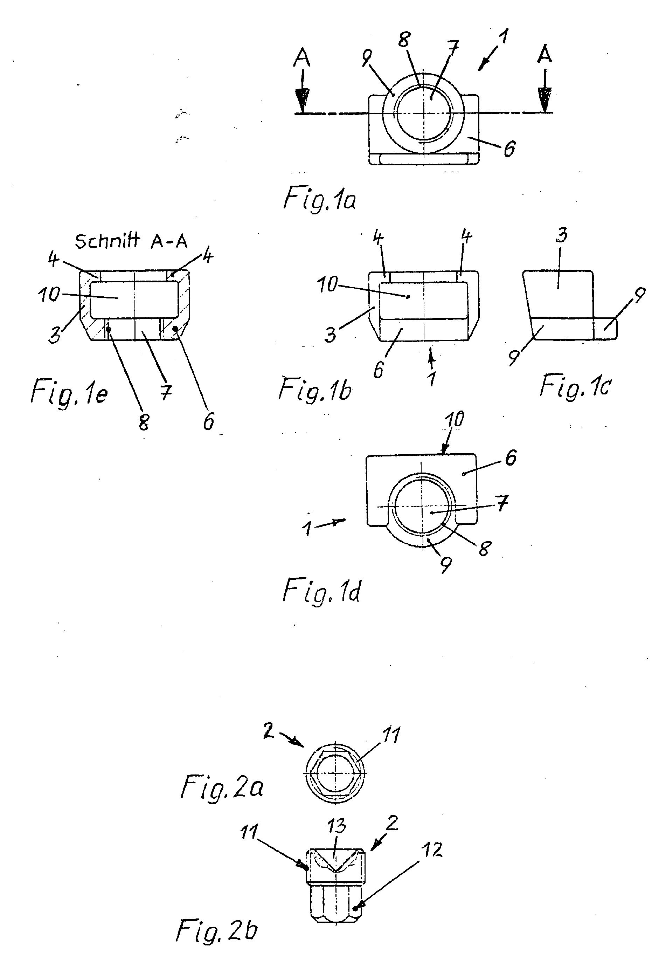

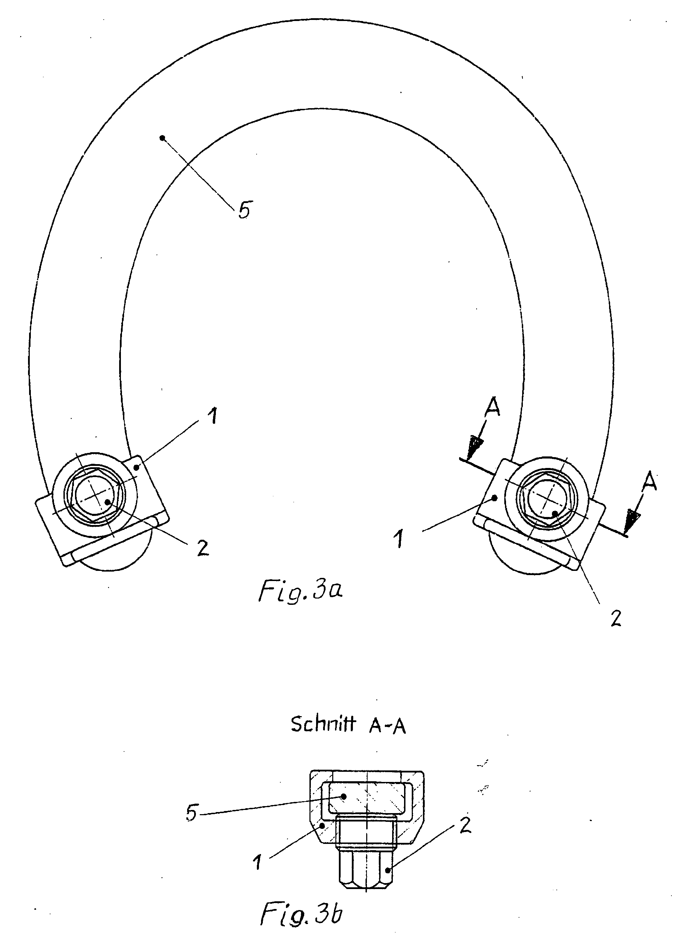

Das Schraubstollenspannsystem besteht aus einem Halter 1 und einem Schraubstollen 2. Der Halter 1 besteht, wie am besten aus den Fig. 1b und 1e zu ersehen, aus einem U-förmigen Bügel 3, der auf das Ende eines Hufeisens 5 aufgeschoben werden kann und dabei mit den nach innen abgewinkelten Enden 4 seiner U-Schenkel das Hufeisen umgreifen kann (siehe Fig. 3a). Im Querschenkel 6 des Bügels 3 ist ein sogenanntes Stollenloch 7 mit Innengewinde 8 vorgesehen. Das Stollenloch 7 kann von einem ringförmigen Bund 9 umgeben sein, der gegenüber dem Querschenkel 6 erhöht sein kann und auch einseitig auch über ihn hinausragen kann. Der Bügel 3 kann durch eine die beiden U-Schenkel verbindende Querwand 10 einseitig abgeschlossen so dass eine Art offenes Gehäuse entsteht. In dieser Querwand 10 und den U-Schenkeln können Durchbrüche (nicht dargestellt) vorgesehen sein. Wie weiter unten noch deutlich wird, kann beim bestimmungsgemäßen Einsatz des Halters 1, dieser mit der Querwand 10 Anschlag am Hufeisenende finden und somit sicher positioniert werden. Die Querwand 10 kann dazu auch dem Hufeisenende folgend abgerundet sein.

Das Stollenloch 7 dient zur Aufnahme eines Schraubstollens 2 gemäß Fig. 2a und 2b. Dieser besteht aus einem zylindrischen Gewindeteil 11 mit Außengewinde und einem Kopfteil 12, das vorzugsweise als Sechskant oder auch als Vierkant ausgebildet ist und dessen Durchmesser vorzugsweise kleiner ist als der des Gewindeteils 11; das Kopfteil 12 ist also gegenüber dem Gewindeteil 11 radial zurückgesetzt. In die Stirnseite des Gewindeteils 11 ist bevorzugt ein Innenkonus 13 eingeschnitten.

Wenn aufgrund bestimmter Bodenverhältnisse einem beschlagenen Pferd Stollen angelegt werden sollen, um Ausrutschen, Stürze und Verletzungen zu vermeiden, so braucht bei Anwendung des neuen Systems lediglich auf jedes Ende eines jeden Hufeisens 5 ein Halter 1 aufgeschoben zu werden, in dem vorzugsweise ein Schraubstollen 2 bereits locker eingeschraubt ist, und dann der Schraubstollen 2 mit einem Mutternschlüssel festgezogen zu werden, bis dieser mit seinem Gewindeteil 11 fest auf dem Hufeisen 5 aufsitzt, das vorstehende Kopfteil 12 wirkt als Stollen. Wenn das Gewindeteil 11 mit einem Innenkonus 13 versehen ist, so kann es sich mit der dadurch entstehenden Ringfläche besonders gut am Hufeisen 5, das aus einem verhältnismäßig weichen Standardeisen bestehen kann, festziehen, so dass ein Verlust des Schraubstollens 2 auf jeden Fall vermieden werden kann. Wenn sich die Bodenverhältnisse geändert haben und die Stollen nicht mehr gebraucht werden, kann in ebenso einfacher Weise, der Schraubstollen 2 im Halter 1 mit dem Mutternschlüssel gelockert und zusammen mit den Halter 1 vom Hufeisen 5 abgezogen und bis zum nächsten Gebrauch verwahrt werden. Halter 1 und Schraubstollen 2 lassen sich immer wieder verwenden, auch wenn sich das verhältnismäßig weiche Hufeisen 5 mit der Zeit abnutzt, kann das System ohne Änderung weiter eingesetzt werden, denn, weil das den eigentlichen Stollen bildende Kopfteil 12 des Schraubstollens 2 gegenüber dem Gewindeteil 11 radial zurückgesetzt ist, kann sich der Schraubstollen 2 bei wiederholter Verwendung immer weiter in den Halter 1 hineinschrauben und sicheren Halt auch am abgenutzten Hufeisen 5 finden. Am Hufeisen 5 selbst werden keine Stollenlöcher mehr gebraucht, damit entfällt auch das lästige Reinigen und Auskratzen der Stollenlöcher vor dem Anbringen der Stollen und es muss nie mehr ein Gewinde am beschlagenen Pferd nachgeschnitten werden.

Während das Hufeisen 5, wie oben erwähnt, aus einem verhältnismäßig weichen Standardeisen bestehen kann, besteht der Schraubstollen 2 bevorzugt aus einem hochwertigen, vergüteten Stahl, der Halter 1 kann aus einem gehärteten Gussteil bestehen.

Das Anbringen und Entfernen der Schraubstollen kann so in einfacher Weise, in kurzer Zeit und ohne Gefahr für Mensch und Tier durchgeführt werden.

Wie bereits erwähnt, kann das beschriebene Schraubstollenspannsystem von jeder Person auch ohne Fachkenntnisse unter Zuhilfenahme lediglich eines Mutternschlüssels, der am Kopfteil 12 des Schraubstollens 2 angesetzt wird, bestimmungsgemäß eingesetzt werden.

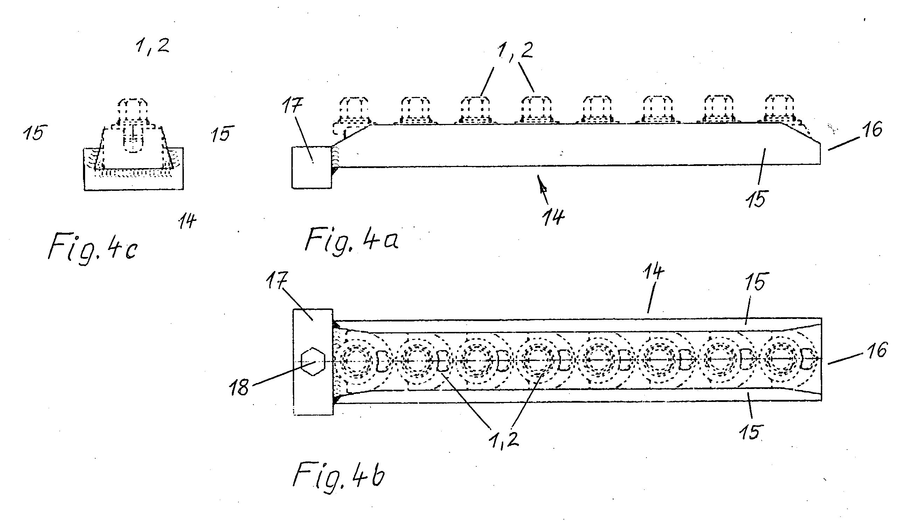

In den Fig. 4a bis 4c ist jedoch ein Werkzeug dargestellt, das den Einsatz noch erleichtert und rationeller macht. Es erfüllt gleichzeitig verschiedene Aufgaben. Es besteht aus einer im wesentlichen U-förmigen Schiene 14, deren beide U-Schenkel 15 leicht konisch nach innen gebogen sind. Länge und Breite der Schiene 14 und der Neigungswinkel ihrer U-Schenkel 15 sind so bemessen, dass mehrere Halter 1 mit eingesetzten Schraubstollen 2 vom offenen Ende 16 her hintereinander klemmend zwischen die U-Schenkel 15 eingeschoben werden können. Vorzugsweise findet gerade ein Satz von Schraubstollen 2 mit Haltern 1, also insgesamt 8 Stück, gleichzeitig in der Schiene 14 Platz. Am entgegengesetzten Ende befindet sich ein querstehender, z.B. quaderförmiger, Ansatz, der als Hammer 17 dienen kann. Im Hammeransatz 17 ist außerdem ein Sechskantloch 18 bzw. Vierkantloch, dem Kopfteil 12 entsprechend, vorgesehen, mit dem das Werkzeug am Kopfteil 12 des Schraubstollens 2 angesetzt werden kann. Das Werkzeug dient also zugleich als Aufbewahrungsort bzw. Vorratshaltung für den Bedarfsfall für vorzugsweise einen Satz Schraubstollen 2 mit Haltern 1, als Mutternschlüssel zum Festziehen oder Ausdrehen der Schraubstollen 2 in den Haltern 1 und für den Fall, dass ein Halter 1, z.B. wegen Verschmutzung, wie mit Erde, Eis oder Schnee, sehr fest auf dem Hufeisenende sitzt, kann dieser Halter 1 mit Hilfe des Hammeransatzes 17 gelockert werden, um ihn vom Hufeisen abziehen zu können.

### Bezugszeichenliste:

- 1: Halter
- 2: Schraubstollen
- 3: Bügel
- 4: Ende
- 5: Hufeisen
- 6: Querschenkel
- 7: Stollenloch
- 8: Innengewinde
- 9: Bund
- 10: Querwand
- 11: Gewindeteil
- 12: Kopfteil
- 13: Innenkonus
- 14: Schiene
- 15: U-Schenkel
- 16: offenes Ende
- 17: Hammeransatz
- 18: Sechskantloch

## Patentansprüche

1. Schraubstollenspannsystem für den Reitsport, wobei am Hufeisen eines Pferdes Schraubstollen befestigt werden, die aus einem Gewindeteil und einem in den Boden greifenden Kopfteil bestehen,
**dadurch gekennzeichnet, dass** es aus einem auf das Ende eines Hufeisens (5) aufschiebbaren Halter (1) und einem in ein am Halter (1) vorgesehenes, durchgehendes Stollenloch (7) mit Innengewinde (8) einschraubbaren Schraubstollen (2) besteht.

2. Schraubstollenspannsystem nach Anspruch 1, **dadurch gekennzeichnet, dass** der Halter (1) aus,einem U-förmigen Bügel (3) besteht, wobei die Enden (4) der U-Schenkel nach innen abgewinkelt sind und das Hufeisen (5) untergreifen, und dass das Stollenloch (7) im Querschenkel (6) des Bügels (3) vorgesehen ist.

3. Schraubstollenspannsystem nach Anspruch 1, **dadurch gekennzeichnet , dass** das Stollenloch (7) von einem Bund (9) umgeben ist.

4. Schraubstollenspannsystem nach Anspruch 2, **dadurch gekennzeichnet, dass** der Halter (1) durch eine die U-Schenkel des Bügels (3) verbindende Querwand (10) einseitig abgeschlossen ist.

5. Schraubstollenspannsystem nach Anspruch 4, **dadurch gekennzeichnet, dass** die die U-Schenkel des Bügels (3) verbindende Querwand (10) der Rundung eines Hufeisenendes folgend abgerundet ist.

6. Schraubstollenspannsystem nach Anspruch 1, **dadurch gekennzeichnet, dass** der Schraubstollen (7) aus einem Gewindeteil (11) und einem Kopfteil (12) besteht, wobei
das Kopfteil (12) als Sechskant oder Vierkant ausgebildet ist und gegenüber dem Gewindeteil (11) radial zurückgesetzt ist.

7. Schraubstollenspannsystem nach Anspruch 6, **dadurch gekennzeichnet, dass** in der Stirnseite des Gewindeteils (11) ein Innenkonus (13) vorgesehen ist.

8. Werkzeug zur Anwendung des Schraubstollenspannssystems nach einem der vorangehenden Ansprüche, **dadurch gekennzeichnet, dass** es aus einer U-förmigen Schiene (14) besteht, deren U-Schenkel (15) nach innen konisch abgewinkelt sind, zur Aufnahme eines oder mehrerer Halter (1) mit Schraubstollen (2) und dass an einem Ende de Schiene (14) ein querstehender Hammeransatz (17) angebracht ist.

9. Werkzeug nach Anspruch 8, **dadurch gekennzeichnet, dass** im Hammeransatz (17) ein Sechskantloch (18) oder Vierkantloch vorgesehen ist.

10. Werkzeug nach Anspruch 8, **dadurch gekennzeichnet, dass** die Breite der Schiene (14) und der Neigungswinkel ihrer U-Schenkel (15) so bemessen sind, dass Halter (1) samt Schraubstollen (2) vom offenen Ende (16) der Schiene (14) her klemmend in die Schiene (14) einschiebbar sind.

11. Werkzeug nach Anspruch 8, **dadurch** gekenneichnet, dass die Länge der Schiene (14) so bemessen ist, dass ein Satz Halter (1) mit Schraubstollen (2) in der Schiene (14) Platz findet.
